Europäisches Patentamt

(19) European Patent Office

Office européen des brevets

(11) Publication number : **0 329 946 B1**

(12) # EUROPEAN PATENT SPECIFICATION

(45) Date of publication of patent specification :
09.09.92 Bulletin 92/37

(51) Int. Cl.⁵ : **B62B 5/00**, B66F 9/075

(21) Application number : **89100980.5**

(22) Date of filing : **20.01.89**

(54) **Truck.**

(30) Priority : **22.01.88 FI 880299**

(43) Date of publication of application :
**30.08.89 Bulletin 89/35**

(45) Publication of the grant of the patent :
**09.09.92 Bulletin 92/37**

(84) Designated Contracting States :
**BE DE ES FR GB IT NL SE**

(56) References cited :
**EP-A- 0 209 502**
**US-A- 2 643 740**
**US-A- 4 431 084**

(73) Proprietor : **ROCLA OY**
**PL 88**
**SF-004401 Järvenpää (FI)**

(72) Inventor : **Sarkkinen, Kyösti**
**Vesitorninkatu 2**
**SF-004400 Järvenpää (FI)**
Inventor : **Stigzelius, Klas**
**Vilkenintie 18C**
**SF-00640 Helsinki (FI)**

(74) Representative : **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22 (DE)**

## Description

The invention concerns a truck that comprises a frame and thereon a drive wheel, two lateral support wheels at the sides of the drive wheel, at least one front support wheel at the front side of the drive wheel, as well as a lifting gear, and wherein the lateral support wheels are mounted on the frame non-resiliently and the drive wheel is mounted in a vertically mobile drive-wheel set.

For example, in industrial plants and warehouses, pallet transfer trolleys and support-wheel trucks are commonly used wherein a drive wheel and, at both sides of the drive wheel, lateral support wheels are mounted on the frame. Moreover, support wheels are also provided at the front side of the drive wheel. The lifting gear is, e.g., a hydraulically operated lifting fork.

One problem in the trucks of said type is how to maintain the grip of the drive wheel on the ground even when operating on uneven ground. This is important, besides in view of the operating capability, also in view of the working safety.

One attempt to solve said problem has been to use a drive wheel mounted rigidly relative the frame and spring-suspended lateral support wheels. A drawback of this construction is, however, poor lateral stability.

Another mode has been to use rigidly mounted lateral support wheels and a spring-suspended drive wheel. In order that the lateral stability of an unloaded vehicle should be retained, the spring force of the drive wheel must be lower than the support force produced by the unloaded truck. Thereat, the grip of the drive wheel of a fully loaded truck during braking remains unduly poor, and may be even lost completely.

From the publication SE-B-449482, a truck provided with a spring-suspended drive wheel is known, which is provided with a hydraulically operated equipment for changing the pretensioning of the spring suspension in accordance with the increasing load. Thus, the equipment is fully bound up with hydraulics. Moreover, it is quite difficult to accomplish in practice.

Thus, the main object of the present invention is to provide a truck wherein it has been possible to make the grip of the drive wheel good, yet, without deterioration of the lateral stability.

US-A-2 643 740 disxloses a truck in which drive-wheel ret is mounted on a sub-frame pivotted to the main frame with the lifting device acting on the sub-frame so as to transfer load to the device wheel.

The specific features of the truck now invented come out from the characterizing part of the patent claim.

In the truck in accordance with the invention, the grip of the drive wheel is always retained irrespective of the loading of the lifting gear, because an increased load is always distributed between the drive wheel and the lateral support wheels. On the other hand, however, owing to the rigidly mounted support wheels, good lateral stability is achieved.

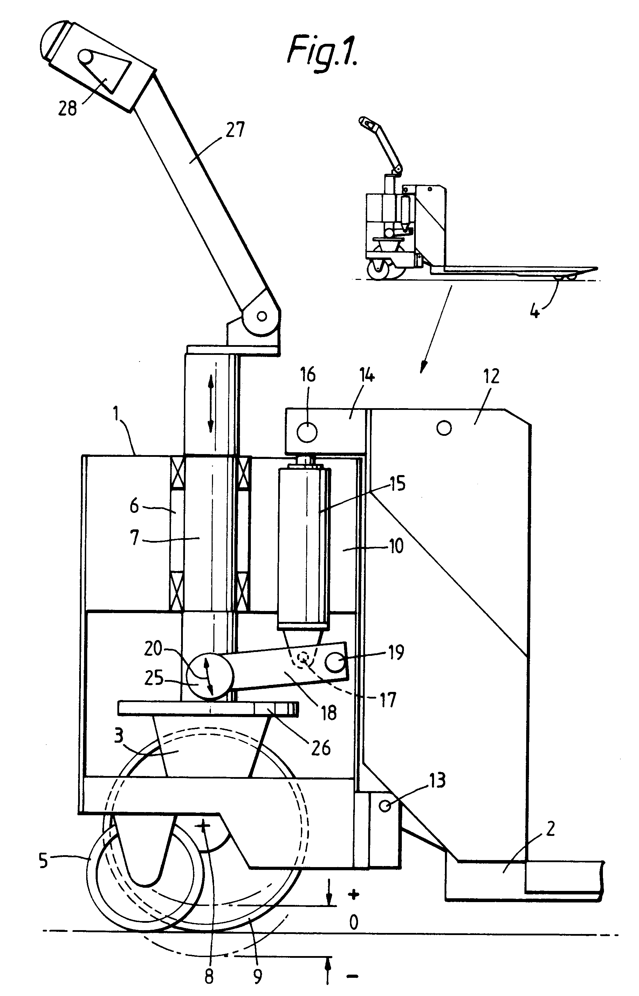

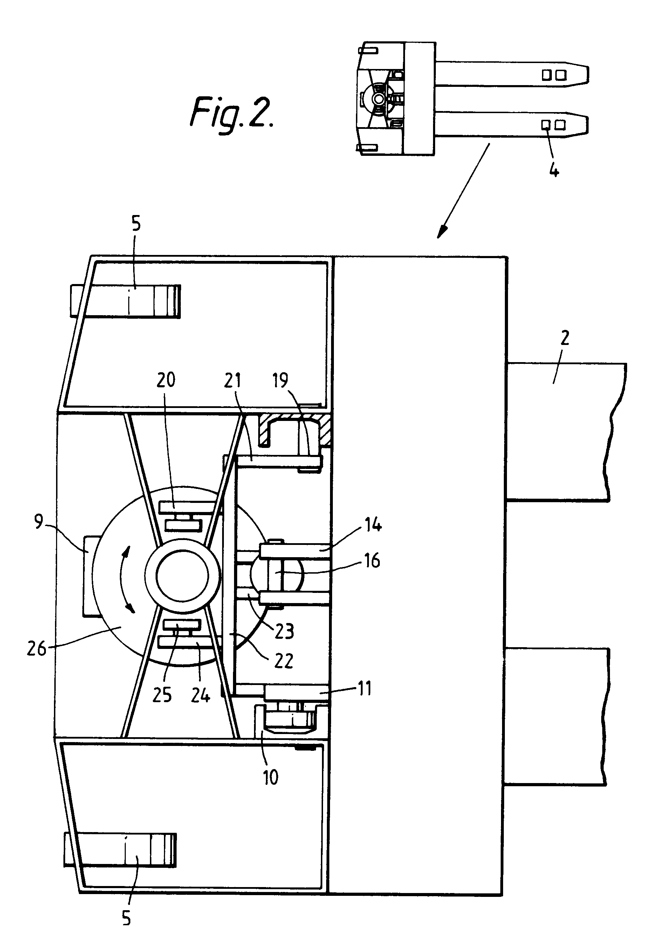

A fork lift truck embodiment of the invention will be described in the following in more detail. In the simplified drawings of the description, Figure 1 is a side view of the truck, and Figure 2 a top view of same.

The main components of the truck are the frame 1, the lifting gear 2, and the accumulator-operated drive wheel-set 3. The lifting gear is, in principle, a conventional hydraulically operated lifting fork, in which the front parts of the arms are provided with front support wheels 4. The pressure in the hydraulic cylinder is produced by means of an accumulator-operated hydraulic unit. The drive wheel-set can be turned by means of a steering rod. The operating levers of the motor are placed in the handle of the steering rod.

In the rear part of the frame, at each side, there is a lateral support wheel 5. The lateral support wheels are freely swiveling castors, which are attached to the frame non-resiliently.

The drive gear comprises a suspension rod 7 freely moving vertically along the vertical guide 6 provided in the frame, the drive wheel 9 and the motor (not shown in the drawing) being mounted on the shaft 8 placed at the lower end of said rod 7.

At the front end of the frame, there is a fastening projection 11 that projects forwards and moves along the vertical guides 10, the lifting gear being mounted on said fastening projection 11 by the lower corner of its rear part 12 at the point 13.

In the upper part of the lifting gear, on the centre line of the truck, there is a rearwardly directed pair of rods 14, on which the upper end 16 of the hydraulic actuating cylinder 15 is journalled, On the other hand, the lower end 17 of the cylinder is mounted between the ends of a lever device 18 parallel to the longitudinal direction of the truck. The front end 19 of the lever device is mounted on the frame, and the rear end 20 presses the drive gear.

The construction of the lever device 18 comes out in more detail from Fig. 2. The lever device is symmetric relative the centre line of the truck. It is provided with front rods 21, whose rear ends are interconnected by a transverse rod 22. From the middle of the transverse rod, middle rods 23 pass forwards, and the lower end 17 of the cylinder 16 is mounted on a shaft placed between the front ends of said middle rods 23. From the transverse rod, rear rods 24 pass to both sides of the suspension rod 7 for the drive-wheel set, vertical wheels 25 being mounted at the rear ends of said rear rods 24 facing the shaft 8 of the drive wheel 9. The wheels 25 again press the plate 26 fixed on and around the suspension rod. The distance of the point of mounting of the hydraulic cylinder from the front end of the lever is proportioned so that the force transferred by the cylinder is distributed optimally between the frame and the drive wheel.

When the truck moves on an uneven ground, the drive wheel is always pressed tightly against the ground, and thereby the driving and braking capacities are retained in all situations. This resilience of the drive wheel in accordance with unevennesses of the ground is illustrated by broken lines and arrows in Fig. 1.

The truck is controlled by means of the steering rod 27 and its handle.

**Claims**

1. A truck that comprises a frame (1) and thereon a drive wheel (9), two lateral support wheels (5) at the sides of the drive wheel, at least one front support wheel (4) at the front side of the drive wheel, as well as a lifting gear (2), and wherein the lateral support wheels are mounted on the frame non-resiliently and the drive wheel is mounted in a vertically mobile drive-wheel set, **characterized** in that the truck is further provided with a lever device (18) parallel to the longitudinal direction of the truck, whose front end (19) is mounted on the frame and whose rear end rests from above on the drive-wheel set (3), and on which said lever device, between its ends, an upwardly directed load rod (15) is attached, to which said load rod part of the weight of the lifting gear (2) is applied from above.

**Patentansprüche**

1. Lastkarren, der umfaßt einen Rahmen (1) und ein daran befindliches Antriebsrad (9), zwei seitliche Stützräder (5) an den Seiten des Antriebsrades, mindestens ein vorderes Stützrad (4) an der Vorderseite des Antriebsrades, wie auch ein Hebegetriebe (2), und bei dem die seitlichen Stützräder unelastisch an dem Rahmen angebracht sind und das Antriebsrad in einer vertikal beweglichen Antriebsradgruppe montiert ist, dadurch **gekennzeichnet**, daß der Lastkarren weiter versehen ist mit einer zur Längsrichtung des Karrens parallelen Hebeleinrichtung (18), deren vorderes Ende (19) an dem Rahmen angebracht und deren hinteres Ende von oben auf der Antriebsradgruppe (3) aufsitzt, und daß an dem Hebelgerät zwischen seinen Enden eine nach oben gerichtete Laststange (15) angebracht ist, auf welche Laststange ein Teil des Gewichts des Hebegetriebes (2) von oben beaufschlagt ist.

**Revendications**

1. Chariot, qui comprend un châssis (1) et une roue motrice (9) sur celui-ci, deux roues de support latérales (5) sur les côtés de la roue motrice, au moins une roue de support frontale (4) sur le côté frontal de la roue motrice, ainsi qu'un mécanisme de levage (2), et dans lequel les roues de support latérales sont montées de manière non-élastique sur le châssis et la roue motrice est montée dans un ensemble de roue motrice mobile verticalement, caractérisé en ce que le chariot comprend en outre un dispositif à levier (18) parallèle à la direction longitudinale du chariot, dont l'extrémité frontale (19) est montée sur le châssis et dont l'extrémité arrière repose par le dessus sur l'ensemble de roue motrice (3), et en ce qu'une barre de charge (15) dirigée vers le haut est attachée sur ledit dispositif à levier, entre ses extrémités, une partie du poids du mécanisme de levage (2) étant appliquée par le dessus à ladite barre de charge (15).

# Fig.1.

# Fig.2.